# EUROPÄISCHE PATENTSCHRIFT

(11) **EP 1 577 610 B1**
(45) Veröffentlichungstag und Bekanntmachung des Hinweises auf die Patenterteilung: **20.09.2006**
(21) Anmeldenummer: 05003213.5
(22) Anmeldetag: 16.02.2005
(51) Int. Cl.: F21V 15/04, B60R 21/34, B60Q 1/04, B60Q 1/00

(54) **Scheinwerfer-Baugruppe für ein Kraftfahrzeug**
Headlight unit for motor vehicles
Dispositif de phare pour véhicules

(30) Priorität: 19.03.2004 DE 102004013536
(43) Veröffentlichungstag der Anmeldung: 21.09.2005
(73) Patentinhaber: REHAU AG + Co, 95111 Rehau (DE)
(72) Erfinder: Lux, Stefan, 95182 Döhlau (DE); Mett, Thomas, 95182 Döhlau (DE)

(56) Entgegenhaltungen:
- EP-A- 1 332 915
- DE-A1- 10 211 972
- DE-C1- 19 840 636
- US-A1- 2004 012 975

## Beschreibung

Die Erfindung betrifft eine Scheinwerfer-Baugruppe für ein Kraftfahrzeug nach dem Oberbegriff des Anspruchs 1.

Aus der US 2002/0122312 A1 ist eine Scheinwerfer-Baugruppe für ein Kraftfahrzeug bekannt, bei der ein Scheinwerferglas im unteren Kantenbereich über eine Lasche an einem Scheinwerfergehäuse befestigt ist. Zwischen dem unteren Abschnitt des Scheinwerferglases und dem Scheinwerfergehäuse liegt ein Energieabsorberelement. Dieses kann einen Stoß auf das Scheinwerferglas, solange die übertragene Energie ausreichend klein ist, aufnehmen, wobei es elastisch deformiert wird

Weiterhin zeigt die gattungsbildende DE 102 11 972 A1 eine Leuchteinheit für ein Fahrzeug, die ein durch eine Scheibe frontseitig abgedecktes Leuchtengehäuse aufweist, das an dem Fahrzeugaufbau befestigt ist. Die Leuchteneinheit ist gegenüber dem Fahrzeugaufbau über eine unter Krafteinwirkung in Fahrzeuglängsrichtung nachgebende Unterstützung gehalten. Durch diese Gestaltung soll bei einem Aufprall von Verkehrsteilnehmern wie Fußgängern oder Zweiradfahrern gegen die Fahrzeugfront ein gewisses Nachgeben der Leuchteneinheit möglich sein.

Für eine Reihe von Fahrzeugtypen haben sich diese Konzepte zur Absorption von Stoßenergie als nicht ausreichend erwiesen.

Es ist daher eine Aufgabe der vorliegenden Erfindung, eine Scheinwerfer-Baugruppe der eingangs genannten Art derart weiterzubilden, dass ein Aufprall auf diese, insbesondere der Aufprall eines Fußgängers, effizient und schonend absorbiert wird.

Diese Aufgabe ist erfindungsgemäß gelöst durch eine Scheinwerfer-Baugruppe mit den Merkmalen nach Anspruch 1.

Erfindungsgemäß wurde zunächst erkannt, dass es erforderlich ist, die Deformationszone zum Abbau von Aufprallenergie nicht direkt am Scheinwerfer selbst anzuordnen. Durch den überstehenden und seitlich versetzten Deformationskörper wird erreicht, dass Aufprallenergie durch die Scheinwerfer-Baugruppe aufgenommen wird, bevor ein Kontakt mit dem Scheinwerfer selbst erfolgt. Der seitliche Versatz des Deformationskörpers neben dem Scheinwerfergehäuse verhindert zudem, dass der Deformationskörper die Leuchtcharakteristik des Scheinwerfers einschränkt. Der Deformationskörper ist fest mit dem Trägerkörper zum Beispiel über Rastelemente oder T-Nuten verbunden.

Zudem treten bei einem derart ausgerüsteten Kraftfahrzeug Bagatellschäden mit geringerer Häufigkeit auf. Dies führt zum Beispiel zu einer niedrigeren Beitragseinstufung, was die Fahrzeugversicherung angeht.
Eine Anordnung des Deformationskörpers nach Anspruch 2 führt insbesondere zu einem effizienten Fußgängerschutz dann, wenn der Fahrzeugscheinwerfer relativ weit oben über der Fahrbahn angeordnet ist, wie dies zum Beispiel bei modernen Sports Utility Vehicles (SUV) der Fall ist. Eine Deformation findet in diesen Fällen tatsächlich dort statt, wo der erste Kontakt mit einem aufprallenden Objekt, insbesondere mit einem aufprallenden Fußgänger, erfolgt.

Materialien für den Deformationskörper nach Anspruch 3 haben sich als besonders effizient hinsichtlich der Energieabsorption herausgestellt. Durch die Materialwahl kann zum Beispiel vorgegeben werden, inwieweit Aufprallenergie in eine elastische, also reversible, Deformation umgewandelt werden kann und ab wann ein plastischer, also irreversibler, Beitrag der Deformation des Deformationskörpers einsetzt.

Deformationselemente nach Anspruch 4 lassen sich einfach fertigen und führen zu einem effizient energieabsorbierenden Deformationskörper.

Ein Deformationskörper nach Anspruch 5 ist stabil und führt zu einem definierten Abbau von Aufprallenergie. Die äußere Abdeckwand kann entweder Teil der Scheinwerfer-Baugruppe sein, zum Beispiel als Blende ausgeführt sein, oder Bestandteil eines externen Bauteils, zum Beispiel eines Stoßfängers, sein.

Eine Befestigungseinrichtung nach Anspruch 6 führt zur Möglichkeit, zusätzlich zur Deformation des Deformationskörpers auch über eine Relativbewegung des Trägerkörpers zum Fahrzeugrahmen einen weiteren Deformationsweg bereitzustellen. Insgesamt kann dann ein vergrößerter Deformationsweg zum schonenden Abbau von Aufprallenergie bereitgestellt sein. Die Befestigungseinrichtung kann auch zur Führung der Verlagerungsbewegung des Trägerkörpers zum Fahrzeugrahmen bei der Deformation dienen.

Eine Befestigungseinrichtung nach Anspruch 7 ist einfach herstell- und montierbar.

Bei einer Befestigungseinrichtung nach Anspruch 8 kann auch über den maximalen Deformationsweg hinaus noch innerhalb eines gewissen Bereiches von Aufprallenergien eine größere Beschädigung der Scheinwerfer-Baugruppe vermieden werden. Nach dem Lösen der Befestigungseinrichtung kann sich das Scheinwerfergehäuse weiter ins Innere des Fahrzeuges verlagern.

Eine Ausgestaltung der Befestigungseinrichtung nach Anspruch 9 ist einfach herstellbar. Alternativ zu einer definiert oberhalb eines vorgegebenen Deformationsweges sich lösenden Befestigungseinrichtung kann auch eine Befestigungseinrichtung mit Sollbruchelementen vorgesehen sein.

Ausführungsbeispiele der Erfindung werden nachfolgend anhand der Zeichnung näher erläutert. In dieser zeigen:
- Fig. 1: eine schematische Ansicht eines Teiles einer Kraftfahrzeugkarosserie mit einer Scheinwerfer-Baugruppe;
- Fig. 2: einen schematischen Schnitt gemäß Linie II-II in Fig. 1;
- Fig. 3: einen schematischen Schnitt gemäß Linie III-III in Fig. 1; und
- Fig. 4: eine zu Fig. 2 ähnliche Ansicht eines scheinwerferträgerseitigen Befestigungselementes einer Befestigungseinrichtung zur Befestigung eines Trägerkörpers für ein Scheinwerfergehäuse der Scheinwerfer-Baugruppe an einem Fahrzeugrahmen des Kraftfahrzeuges.

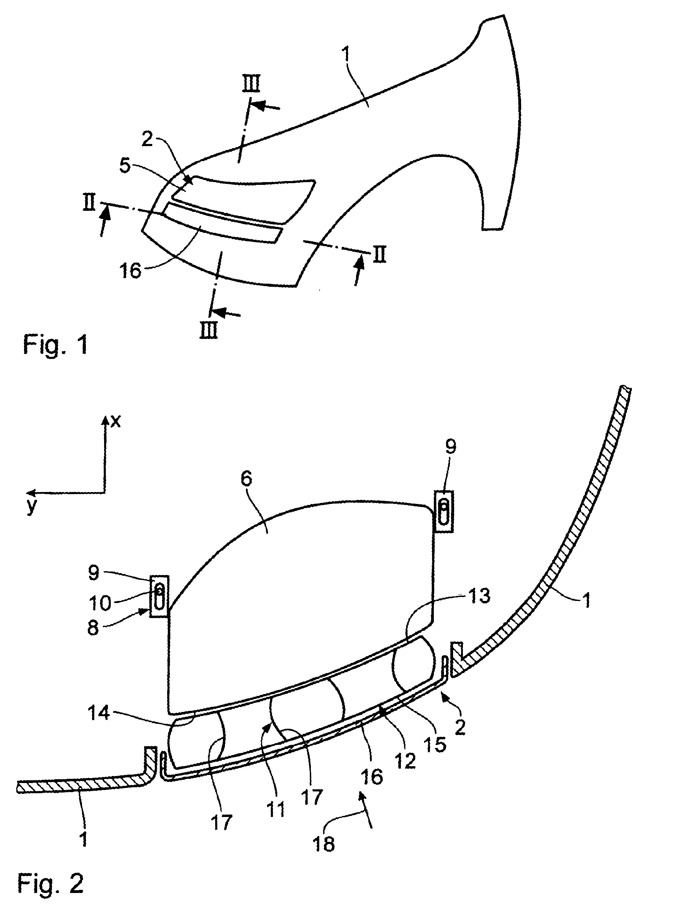

Ein Kraftfahrzeug, von dem in Fig. 1 ein linker frontseitiger Kotflügel 1 dargestellt ist, weist frontseitig zwei jeweils in die Kotflügel integrierte Scheinwerfer-Baugruppen 2 auf.

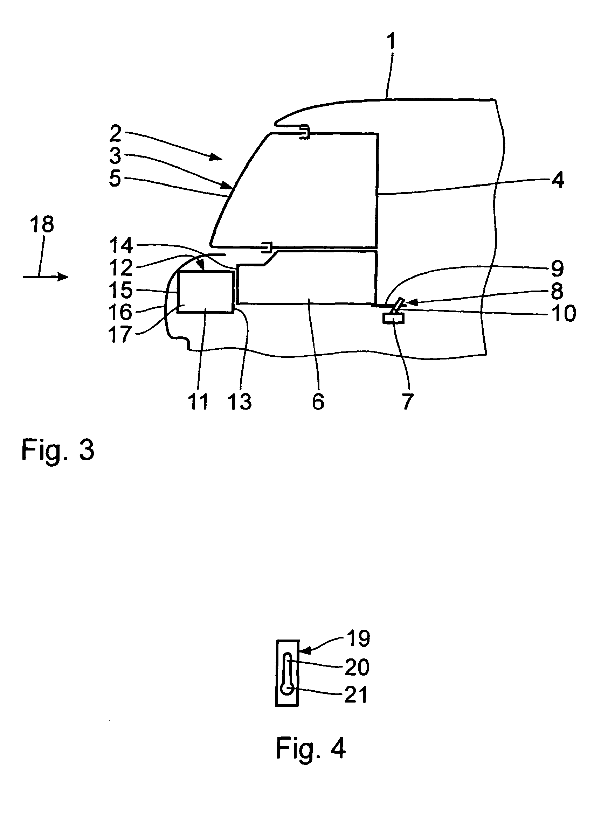

Die Fig. 2 und 3 zeigen einen horizontalen und einen vertikalen Schnitt durch den Kotflügel 1 im Bereich der Scheinwerfer-Baugruppe 2. Die Scheinwerfer-Baugruppe 2 weist ein Scheinwerfergehäuse 3 auf, welches aus einem rückseitigen Gehäuseabschnitt 4 und einer Scheibe 5, insbesondere einer Klarglasscheibe, aufgebaut ist.

Getragen wird das Scheinwerfergehäuse 3 von einem Trägerkörper 6, der unter dem Scheinwerfergehäuse 3 angeordnet ist. Der Trägerkörper 6 ist an einem in Fig. 3 abschnittsweise dargestellten Rahmenbauteil 7 eines Fahrzeugrahmens mittels einer Mehrzahl von Befestigungseinrichtungen 8 angebracht, von denen in Fig. 3 eine dargestellt ist. Die Befestigungseinrichtung 8 umfasst ein als Langloch ausgeführtes trägerkörperseitiges Befestigungselement 9 und ein in dieses eingreifendes rahmenseitiges Befestigungselement 10 in Form eines Stiftes oder eines Hakens. Insgesamt können zum Beispiel vier derartige Befestigungseinrichtungen 8 zur Anbringung des Trägerkörpers 6 am Fahrzeugrahmen vorgesehen sein.

Fest formschlüssig mit dem Trägerkörper 6 verbunden ist ein Deformationskörper 11. Der Deformationskörper 11 ist aus dem Kunststoff Polyamid (PA), im vorliegenden Beispiel aus Caprolactam (PA6). Die formschlüssige Verbindung des Deformationskörpers 11 mit dem Trägerkörper 6 kann zum Beispiel über Rastelemente oder T-Nuten erfolgen. Der Deformationskörper 11 liegt unterhalb des frontseitigen Abschlusses des Scheinwerfergehäuses 3 und steht in Leuchtrichtung des Scheinwerfers der Scheinwerfer-Baugruppe 2, also im in Fig. 2 dargestellten rechtwinkligen XY-Koordinatensystem entgegen der X-Richtung, über das Scheinwerfergehäuse 3 über. Aufgrund der Anbringung unterhalb des Scheinwerfergehäuses 3 ist der Deformationskörper 11 quer zur Leuchtrichtung seitlich versetzt zum Scheinwerfergehäuse 3 angeordnet.

Der Deformationskörper 11 weist ein Deformationskörpergehäuse 12 auf. Dieses umfasst eine rückseitige Gehäusewand 13, die an einer frontseitigen Stirnwand 14 des Trägerkörpers 6 anliegt, und eine hierzu im wesentlichen parallel verlaufende frontseitige Gehäusewand 15, die an einer als Blende ausgeführten Abdeckwand 16 innen anliegt. Letztere dient zur Abdeckung des Deformationskörpers 11 sowie des weiter innen angeordneten Trägerkörpers 6 und kann entweder Teil der Scheinwerfer-Baugruppe 2 sein oder Bestandteil einer separaten Baugruppe, zum Beispiel eines Stoßfängers, sein. Im vorliegenden Fall ist die Abdeckwand 16 Teil der Scheinwerfer-Baugruppe 2.

Zwischen den Gehäusewänden 13, 15 weist der Deformationskörper 11 eine Mehrzahl, beim dargestellten Ausführungsbeispiel insgesamt sechs, von Deformationselementen 17 auf.

Der Deformationskörper 11 kann längs eines Deformationsweges in einer Deformationsrichtung, die in Fig. 2 durch einen Pfeil 18 angedeutet ist, im wesentlichen senkrecht zu den Gehäusewänden 13, 15 deformiert werden. Die Deformationselemente 17 sind quer zu dieser Deformationsrichtung 18 ausgebaucht.

Der Deformationskörper 11 dient als Fußgängerschutzelement. Bei einem frontseitigen Aufprall zum Beispiel eines Fußgängers auf die Abdeckwand 16 nimmt der Deformationskörper 11 Deformationsenergie auf, wobei die Deformationselemente 17 stärker ausbauchen. Unterhalb eines vorgegebenen Grenzwertes für die aufgenommene Deformationsenergie ist die Deformation der Deformationselemente 17 elastisch, so dass der Deformationskörper 11 von selbst wieder in die in der Zeichnung dargestellte Ruhestellung zurückkehrt. Oberhalb einer vorgegebenen aufgenommenen Deformationsenergie verformen sich die Deformationselemente 17 plastisch. Unterhalb einer weiteren Grenze für die aufgenommene Deformationsenergie, die zu der bereits erwähnten Grenze gleich sein kann, aber nicht sein muss, bleibt der Trägerkörper 6 in fester Relativposition zum Rahmen des Kraftfahrzeuges, zum Beispiel zum Rahmenbauteil 7. Diese feste Relativposition wird nachfolgend auch als Befestigungsstellung bezeichnet. Oberhalb dieser weiteren Grenze aufgenommener Deformationsenergie weicht der Trägerkörper 6 in Fig. 2 in X-Richtung zurück, wobei das trägerkörperseitige Befestigungselement 9 sich relativ zum rahmenseitigen Befestigungselement 10 bewegt. Die Länge des Langloches des Befestigungselementes 9 gibt den maximalen von der Befestigungseinrichtung 8 zugelassenen Deformationsweg vor. Solange dieser Deformationsweg unterschritten bleibt, behält die Befestigungseinrichtung 8 ihre Befestigungsfunktion. Oberhalb dieses Deformationsweges löst sich das Befestigungselement 9 vom Befestigungselement 10.

Durch den Deformationskörper 11 wird in Verbindung mit dem von der Befestigungseinrichtung 8 bereitgestellten Deformationsweg ein Gesamt-Deformationsweg von zum Beispiel 80 mm bereitgestellt. Erst oberhalb dieses Gesamt-Deformationsweges führt ein Aufprall auf die Scheinwerfer-Baugruppe 2 im Bereich des Deformationskörpers 11 zu einem größeren Schaden an der Scheinwerfer-Baugruppe 2.

Fig. 4 zeigt ein alternatives trägerkörperseitiges Befestigungselement 19, welches ebenfalls als Langloch ausgeführt ist. Das Befestigungselement 19 kann anstelle des Befestigungselementes 9 bei der Ausführung nach den Fig. 1 bis 3 eingesetzt sein.

Das Befestigungselement 19 weist einen ersten Langlochabschnitt 20 und einen diesen fortsetzenden Erweiterungsabschnitt 21 auf, so dass das Befestigungselement 19 an ein auf dem Kopf stehendes Schlüsselloch erinnert. In der Befestigungsstellung greift das rahmenseitige Befestigungselement 10 in den ersten Langlochabschnitt 20 des Befestigungselementes 19 ein. Nach einer Verlagerung des Trägerkörpers 6 in X-Richtung längs des Langloches, in einer Deformationsstellung der das Befestigungselement 19 aufweisenden Befestigungseinrichtung, verlässt ein Kopf bzw. Haken des rahmenseitigen Befestigungselementes 10 das Befestigungselement 19 über den Erweiterungsabschnitt 21, so dass sich die Befestigungselemente 10, 19 voneinander lösen.

Beim Lösen der Befestigungselemente 9, 10 bzw. 19, 10 voneinander wird die Befestigungseinrichtung 8 nicht irreversibel deformiert. Alternativ ist es auch möglich, die Befestigungseinrichtung 8 mit einer Sollbruchstelle derart auszustatten, dass ab einer vorgegebenen Relativverlagerung des Trägerkörpers 6 zum Fahrzeugrahmen ein Sollbruch der Befestigungseinrichtung 8 erfolgt.

Die Gehäusewände 13, 15 haben eine Wandstärke, die größer ist als die Stärke der Deformationselemente 17. Das Wandstärkenverhältnis kann je nach den Einbauverhältnissen, der aufzunehmenden Aufprallenergie bzw. den verwendeten Materialien angepasst werden.

Neben dem Material Polyamid aus Caprolactam (PA6) kann der Deformationskörper aus folgenden weiteren Materialvarianten aufgebaut sein: Polyamid aus Caprolactam mit 10 bis 30 Volumenprozent Glasfasern, Polyamid aus Caprolactam (PA6) mit 10 bis 30 Volumenprozent Mineralfüllung, Polypropylen (PP), Polypropylen (PP) mit 10 bis 30 Volumenprozent Glasfasern, Polypropylen (PP) mit 10 bis 30 Volumenprozent Talkumverstärkung, Polycarbonat (PC), Polycarbonat (PC) mit 10 bis 30 Volumenprozent Glasfasern, Polycarbonat/Acrylnitrit/Butadien/Styrol (PC/ABS), Polycarbonat/Acrylnitril/Butadien/Styrol (PC/ABS) mit 10 bis 30 Volumenprozent Glasfasern, Polycarbonat/Polybutylenterephthalat (PC/PBT), Polycarbonat/Polybutylenterephthalat (PC/PBT) mit 10 bis 30 Volumenprozent Glasfasern, Polycarbonat/Polyethylenterephthalat (PC/PET), Polycarbonat/Polyethylenterephthalat (PC/PET) mit 10 bis 30 Volumenprozent Mineralfüllung, Polybutylenterephthalat (PBT), Polybutylenterephthalat (PBT) mit 10 bis 30 Volumenprozent Glasfasern.

## Patentansprüche

1. Scheinwerfer-Baugruppe (2) für ein Kraftfahrzeug
- mit einem Scheinwerfergehäuse (3),
- mit einem am Fahrzeugrahmen mittels einer Befestigungseinrichtung angebrachten Trägerkörper (6) für das Scheinwerfergehäuse (3),
- mit einem Deformationskörper (11), der in Leuchtrichtung des Scheinwerfers über das Scheinwerfergehäuse (3) übersteht und neben dem Scheinwerfergehäuse (3) angeordnet ist,
**dadurch gekennzeichnet, dass** der Trägerkörper (6) fest mit dem Deformationskörper (11) verbunden ist.

2. Scheinwerfer-Baugruppe (2) nach Anspruch 1, **dadurch gekennzeichnet, dass** der Deformationskörper (11) unterhalb des Scheinwerfergehäuses (3) angeordnet ist.

3. Scheinwerfer-Baugruppe nach Anspruch 1 oder 2, **gekennzeichnet durch** einen Deformationskörper (11) aus Kunststoff, insbesondere aus einem oder mehreren der folgenden Materialien: Polyamid aus Caprolactam (PA6), Polyamid aus Caprolactam mit 10 bis 30 Volumenprozent Glasfasern, Polyamid aus Caprolactam (PA6) mit 10 bis 30 Volumenprozent Mineralfüllung, Polypropylen (PP), Polypropylen (PP) mit 10 bis 30 Volumenprozent Glasfasern, Polypropylen (PP) mit 10 bis 30 Volumenprozent Talkumverstärkung, Polycarbonat (PC), Polycarbonat (PC) mit 10 bis 30 Volumenprozent Glasfasern, Polycarbonat/Acrylnitril/Butadien/Styrol (PC/ABS), Polycarbonat/Acrylnitril/Butadien/Styrol (PC/ABS) mit 10 bis 30 Volumenprozent Glasfasern, Polycarbonat/Polybutylenterephthalat (PC/PBT), Polycarbonat/Polybutylenterephthalat (PC/PBT) mit 10 bis 30 Volumenprozent Glasfasern, Polycarbonat/Polyethylenterephthalat (PC/PET), Polycarbonat/Polyethylenterephthalat (PC/PET) mit 10 bis 30 Volumenprozent Mineralfüllung, Polybutylenterephthalat (PBT), Polybutylenterephthalat (PBT) mit 10 bis 30 Volumenprozent Glasfasern.

4. Scheinwerfer-Baugruppe nach einem der Ansprüche 1 bis 3, **dadurch gekennzeichnet, dass** der Deformationskörper (11) eine Mehrzahl von Deformationselementen (17) aufweist, die insbesondere als quer zu einer Deformationsrichtung (18) des Deformationskörpers (11) ausgebauchte Deformationsrippen gestaltet sind.

5. Scheinwerfer-Baugruppe nach Anspruch 4, **dadurch gekennzeichnet, dass** die Deformationselemente (17) zwischen zwei quer zu einer Deformationsrichtung (18) des Deformationskörpers (11) liegenden Deformationskörper-Gehäusewänden (13, 15) liegen, wobei eine der Gehäusewände (13) am Trägerkörper (6) anliegt und die andere der Gehäusewände (15) an einer äußeren Abdeckwand (16) anlegbar ist.

6. Scheinwerfer-Baugruppe nach einem der Ansprüche 1 bis 5, **dadurch gekennzeichnet, dass** die Befestigungseinrichtung (8) ein erstes trägerkörperseitiges Befestigungselement (9; 19) und ein hiermit zusammenwirkendes rahmenseitiges Befestigungselement (10) aufweist, wobei die Befestigungselemente (9, 10; 19, 10) derart gestaltet sind, dass eine Relativbewegung der Befestigungselemente (9, 10; 19, 10) über einen vorgegebenen Deformationsweg des Trägerkörpers (6) hinaus möglich ist, ohne dass die Befestigungseinrichtung (8) deformiert wird.

7. Scheinwerfer-Baugruppe nach Anspruch 6, **dadurch gekennzeichnet, dass** eines der Befestigungselemente (9; 19) als Langloch ausgeführt ist, in welches das andere der Befestigungselemente (10) eingreift.

8. Scheinwerfer-Baugruppe nach Anspruch 6 oder 7, **dadurch gekennzeichnet, dass** die Befestigungseinrichtung (8) derart ausgeführt ist, dass ab einem vorgegebenen Deformationsweg des Trägerkörpers (6) sich die Befestigungselemente (9, 10; 19, 10) voneinander lösen, ohne dass die Befestigungseinrichtung (8) irreversibel deformiert wird.

9. Scheinwerfer-Baugruppe nach Anspruch 7 oder 8, **dadurch gekennzeichnet, dass** ein erstes (19) der Befestigungselemente (19, 10) als Langloch mit einem ersten Langlochabschnitt (20) und einem diesen fortsetzenden Erweiterungsabschnitt (21) derart ausgeführt ist, dass das zweite Befestigungselement (10) in einer Befestigungsstellung in den ersten Langlochabschnitt (20) des ersten Befestigungselementes (19) eingreift und in einer Deformationsstellung sich über den Erweiterungsabschnitt (21) vom ersten Befestigungselement (19) löst.

## Claims

1. Headlight assembly (2) for a motor vehicle
- having a headlight housing (3),
- having a support body (6), which is attached to the vehicle frame by means of a fastening device, for the headlight housing (3),
- having a deformation body (11) which projects beyond the headlight housing (3) in the lighting direction of the headlight and is arranged adjacent to the headlight housing (3),
**characterized in that** the support body (6) is fixedly connected to the deformation body (11).

2. Headlight assembly (2) according to Claim 1, **characterized in that** the deformation body (11) is arranged below the headlight housing (3).

3. Headlight assembly according to Claim 1 or 2, **characterized by** a deformation body (11) made from plastic, in particular from one or more of the following materials: polyamide of caprolactam (PA6), polyamide of caprolactam having 10 to 30 per cent by volume of glass fibres, polyamide of caprolactam (PA6) having 10 to 30 per cent by volume of mineral filler, polypropylene (PP), polypropylene (PP) having 10 to 30 per cent by volume of glass fibres, polypropylene (PP) having 10 to 30 per cent by volume of talc reinforcement, polycarbonate (PC), polycarbonate (PC) having 10 to 30 per cent by volume of glass fibres, polycarbonate/acrylonitrile/butadiene/styrene (PC/ABS), polycarbonate/acrylonitrile/butadiene/styrene (PC/ABS) having 10 to 30 per cent by volume of glass fibres, polycarbonate/polybutylene terephthalate (PC/PBT), polycarbonate/polybutylene terephthalate (PC/PBT) having 10 to 30 per cent by volume of glass fibres, polycarbonate/polyethylene terephthalate (PC/PET), polycarbonate/polyethylene terephthalate (PC/PET) having 10 to 30 per cent by volume of mineral filler, polybutylene terephthalate (PBT), polybutylene terephthalate (PBT) having 10 to 30 per cent by volume of glass fibres.

4. Headlight assembly according to one of Claims 1 to 3, **characterized in that** the deformation body (11) has a plurality of deformation elements (17) which are designed in particular as deformation ribs which bulge transversely with respect to a deformation direction (18) of the deformation body (11).

5. Headlight assembly according to Claim 4, **characterized in that** the deformation elements (17) are situated between two deformation body housing walls (13, 15) which are situated transversely with respect to a deformation direction (18) of the deformation body (11), wherein one of the housing walls (13) bears against the support body (6), and the other housing wall (15) can bear against an outer covering wall (16).

6. Headlight assembly according to one of Claims 1 to 5, **characterized in that** the fastening device (8) has a first fastening element (9; 19) on the support body, and a fastening element (10) which is on the frame and interacts with said first fastening element (9; 19), wherein the fastening elements (9, 10; 19, 10) are designed such that a relative movement of the fastening elements (9, 10; 19, 10) beyond a predefined deformation travel of the support body (6) is possible without the fastening device (8) being deformed.

7. Headlight assembly according to Claim 6, **characterized in that** one of the fastening elements (9; 19) is embodied as a slot in which the other fastening element (10) engages.

8. Headlight assembly according to Claim 6 or 7, **characterized in that** the fastening device (8) is designed such that, beyond a predefined deformation travel of the support body (6), the fastening elements (9, 10; 19, 10) are released from one another without the fastening device (8) being irreversibly deformed.

9. Headlight assembly according to Claim 7 or 8, **characterized in that** a first fastening element (19) of the fastening elements (19, 10) is embodied as a slot having a first slot section (20) and an extension section (21) which forms a continuation of the first slot section (20), such that, in a fastening position, the second fastening element (10) engages in the first slot section (20) of the first fastening element (19), and in a deformation position, is released from the first fastening element (19) via the extension section (21).

## Revendications

1. Module d'éclairage avant (2) pour un véhicule à moteur
- avec un bloc de phare (3),
- avec un élément de support (6) pour le bloc de phare (3), ledit élément étant attaché au châssis par un dispositif de fixation,
- avec un corps déformable (11) qui est disposé à côté du bloc de phare (3) et qui dépasse le bloc de phare (3) dans le sens de l'éclairage produit par le phare,
**caractérisé en ce que** l'élément de support (6) est solidement attaché au corps déformable (11).

2. Module d'éclairage avant (2), réalisé selon la revendication 1, **caractérisé en ce que** le corps déformable (11) est disposé en dessous le bloc de phare (3).

3. Module d'éclairage avant, réalisé selon les revendications 1 ou 2, **caractérisé par** un corps déformable (11) en matière plastique, ce dernier étant en particulier réalisé à partir d'un ou de plusieurs des matériaux suivant : polyamide à base de caprolactame (PA6), polyamide à base de caprolactame avec 10 à 30 pour cent en volume de fibres de verre, polyamide à base de caprolactame (PA6) avec 10 à 30 pour cent en volume de charges minérales, polypropylène (PP) avec 10 à 30 pour cent en volume de fibres de verre, polypropylène (PP) renforcé avec 10 à 30 pour cent en volume de talc, polycarbonate (PC), polycarbonate (PC) avec 10 à 30 pour cent en volume de fibres de verre, polycarbonate/acrylonitrile/butadiène/styrène (PC/ABS), polycarbonate/acrylonitrile/butadiène/styrène (PC/ABS) avec 10 à 30 pour cent en volume de fibres de verre, polycarbonate/polybutylène téréphtalate (PC/PBT), polycarbonate/polybutylène téréphtalate (PC/PBT) avec 10 à 30 pour cent en volume de fibres de verre, polycarbonate/polyéthylène téréphtalate (PC/PET), polycarbonate/polyéthylène téréphtalate (PC/PET) avec 10 à 30 pour cent en volume de charges minérales, polybutylène téréphtalate (PBT), polybutylène téréphtalate (PBT) avec 10 à 30 pour cent en volume de fibres de verre.

4. Module d'éclairage avant, réalisé selon une des revendications 1 à 3, **caractérisé en ce que** le corps déformable (11) comprend une multitude d'éléments déformables (17) qui, en particulier, sont réalisés sous forme de nervures déformables qui sont bombées de manière transversale par rapport au sens de déformation (18) du corps déformable (11).

5. Module d'éclairage avant, réalisé selon la revendication 4, **caractérisé en ce que** les éléments déformables (17) se trouvent entre deux parois (13, 15) du boîtier recevant le corps déformables, lesdites parois étant disposées de manière transversale par rapport au sens de déformation (18) du corps déformable (11) et l'une (13) des parois du boîtier étant attenante à l'élément de support (6) alors que l'autre (15) paroi du boîtier peut être posée contre une paroi extérieure (16) servant de couverture.

6. Module d'éclairage avant, réalisé selon une des revendications 1 à 5, **caractérisé en ce que** le dispositif de fixation (8) comporte un premier élément de fixation (9 ; 19) du côté de l'élément de support et un autre élément de fixation (10) du côté du châssis qui coopère avec le premier, les éléments de fixation (9, 10 ; 19, 10) étant réalisés de manière à ce que les éléments de fixation (9, 10 ; 19, 10) puissent exercer un mouvement relatif qui dépasse un chemin de déformation préalablement défini pour l'élément de support (6), sans que le dispositif de fixation (8) soit déformé.

7. Module d'éclairage avant, réalisé selon la revendication 6, **caractérisé en ce que** l'une des éléments de fixation (9 ; 19) est réalisé sous forme d'un trou oblong dans lequel l'autre élément de fixation (10) s'engrène.

8. Module d'éclairage avant, réalisé selon les revendications 6 ou 7, **caractérisé en ce que** le dispositif de fixation (8) est réalisé de manière à ce que, lorsqu'un chemin de déformation préalablement défini pour l'élément de support (6) est dépassé, les éléments de fixation (9, 10 ; 19, 10) lâchent prise l'un de l'autre, sans que le dispositif de fixation (8) ne soit irréversiblement déformé.

9. Module d'éclairage avant, réalisé selon les revendications 7 ou 8, **caractérisé en ce que** le premier (19) des éléments de fixation (19, 10) est réalisé sous forme d'un trou oblong comportant une première section (20) qui se prolonge par une section élargie (21), le deuxième élément de fixation (10) s'engrenant, en position de fixation, dans la première section (20) du trou oblong du premier élément de fixation (19) et, en position de déformation, lâchant prise du premier élément de fixation (19) à travers la section élargie (21).
